Europäisches Patentamt

European Patent Office

Office européen des brevets

(19)

(11) Publication number: **0 593 833 A1**

## EUROPEAN PATENT APPLICATION

(12)

(21) Application number: **92610072.8**

(22) Date of filing: **21.10.92**

(51) Int. Cl.5: **A23G 1/04**, A23G 1/18, A23G 1/06

(43) Date of publication of application:
**27.04.94 Bulletin 94/17**

(84) Designated Contracting States:
**AT BE CH DE DK ES FR GB GR IE IT LI LU MC NL PT SE**

(71) Applicant: **NIRO SOAVI S.p.A.**
**Via M. Da Erba Edoari 29/A**
**I-43100 Parma(IT)**

(72) Inventor: **Kirpestein, Derrick Adriaan**
**Johannes**
**Albert Schweitzerlaan 52**
**NL-2037 RS Haarlem(NL)**
Inventor: **Angelini, Piero**
**Via Petrarca 12**
**I-43100 Parma(IT)**

(74) Representative: **Andersen, Henrik Rastrup et al**
**c/o Plougmann & Vingtoft A/S**
**Sankt Annae Plads 11**
**P.O. Box 3007**
**DK-1021 Copenhagen K (DK)**

(54) **Method for the reduction of the viscosity of a cacao liqueur.**

(57) The viscosity of cocoa liquor is reduced by treating the cocoa liquor in a high pressure homogenizer. The lower viscosity makes it possible to reduce the time consumption in the separation of cocoa butter from cocoa powder in a filter press, thus increasing the capacity of the filter press. The low viscosity makes it possible to use other types of separation, such as centrifugation or sedimentation. The high pressure homogenizer can be equipped with a valve of the emulsiontype or of the rupture-type.

Fig. 2

FIELD OF THE INVENTION

The present invention relates to a method for reducing the viscosity of cocoa liquor, a cocoa liquor having a low viscosity, and a method for producing cocoa butter and cocoa powders.

GENERAL BACKGROUND

For the production of cocoa liquor, cocoa butter, and cocoa powder, cocoa beans have for many years been processed using more or less well-defined series of steps as will be explained in the following:

The cocoa tree, from which the cocoa bean is obtained, grows in tropical areas such as Central Africa and West Africa. Each area has its own sorts which are characteristic with respect to taste, colour, fat content and the like. After picking, the beans are subjected to a fermentation process during which yeast and acid-forming bacteria develop and cause the pH of the cocoa beans to drop to 4-6. Then, the cocoa beans are packaged in bags of about 65 kg and shipped to the users. After arrival at industrial plants, the cocoa beans are broken, and the shells are removed by winnowing, a process dependent upon the difference in the density of the kernel and the shell. The clean kernels are referred to as nibs and normally have a content of cocoa butter of 50-56%. After winnowing, the nibs are stored in a buffer storage until the next step, alkalization and moistening, is performed. Alkalization is an important procedure with respect to the quality of the final product. As indicated above, the cocoa beans are slightly sour because of the formation of organic acids during the fermentation of the cocoa bean. The alkalizing process involves treatment of the nibs with an alkaline liquid, for example a solution of potassium or sodium carbonate. This treatment not only changes the degree of acidity but also makes the colour darker because of chemical changes in the molecules of the coloured substances. Depending on the reaction conditions, such as the type and amount of alkali employed, ratio of water to alkali and to amount of nibs, time, temperature, and aeration during the alkalization process, it is possible to influence the colour intensity and hue. The alkalizing process also results in a milder flavour of the cocoa, possibly because the sharp acids of the natural cocoa have been neutralized. With good control of the alkalizing process, various flavour types suitable for different applications can be produced, but considerable expertise is needed to make finished powders or other cocoa products of a consistent colour from the varying types of cocoa beans. After the alkalizing process, the cocoa nibs have to be carefully handled if decrease in quality with respect to colour and flavouring is to be avoided.

For the further development of flavour and aroma, the nibs undergo roasting. The roasting temperature varies with the bean type and, again, skill is needed to obtain cocoa beans from a roaster with just the colour and flavour needed for any given purpose. Roasting is followed by active cooling to avoid fat migration from the nibs.

The next step in the production of cocoa liquor, cocoa butter, and cocoa powder is nib grinding. Cocoa nibs have a cellular structure with the cocoa butter in solid form locked within the cells. Some of the cell walls are ruptured in the grinding process, and frictional heat liquifies the fat. Thus, the nibs are ground to an impalpable mass, and provided the temperature is kept above the melting point of cocoa butter, the mass flows freely in a fairly thin stream. The fluidity of the mass is due to the molten cocoa butter, and the fluid mass which contains suspended particles of cocoa is defined as cocoa liquor. The cocoa liquor is sold commercially for further processing in the chocolate industry or used for the manufacture of cocoa powder and cocoa butter. The grinding mentioned above can be performed in a knife mill which is capable of grinding the nibs to a liquor, or the nibs may be ground in one of the standard mills mentioned below. Once produced, the cocoa liquor is normally stored at a temperature above the melting point of the cocoa butter to avoid solidification. The temperature should, however, not exceed 80°C in order to prevent damage to the heat-sensitive components which are responsible for the colour achieved during the alkalization process.

A cocoa liquor resulting from the grinding in a knife mill is normally ground to reduce the particle size and to release remaining cocoa butter entrapped in the cells. Many kinds of mills for liquor grinding have been developed over the years. Among those that are still in use, each has its own advantages compared to the others, such as reduced power consumption, more accurate control of fineness and particle size distribution, reduced frictional heat development and risk of subsequent undesired flavour change, and reduced metal contamination due to frictional abrasion.

The mills most commonly used in the cocoa industry are triple stone mills, roller type mills, and ball type mills.

Triple stone mills have certain disadvantages. These are firstly difficulty in producing particles of a uniform size and, secondly, difficulty in preventing the temperature of the liquor from rising to an excessively high level as a result of frictional heat.

In the roller mills, the temperature can be more effectively controlled since each cylindrical steel roller is individually water cooled. The primary disadvantages of this kind of mill are that uniformity of the particles is to a high degree dependent on the skill of the operator handling the adjustable rollers, and that the particles tend to have a flat platelet shape.

In the third and most commonly used type of mill, the ball mill, the cocoa liquor is pumped into the bottom of the mill and flows out at the top, where the liquor can be recycled if desired. Some of the disadvantages of the ball mill are a large space requirement and excessive power consumption. When using a ball mill, the cocoa liquor is heated due to friction, and even though the ball mill is cooled externally, the core of the mass easily reaches critical temperatures of about 110°C. At this temperature, the risk of undesirable colour changes is considerable. As already indicated above, cocoa colour is one of the most important factors in measuring the quality of the final cocoa product, and temperature control is therefore a crucial factor in cocoa processing. For the production of high quality cocoa liquor, milling is preferably performed in two separate ball mills so that a shift to a "cool" mill can take place without interruption of the process. In this respect, it should be mentioned that it is not possible just to stop the ball mill during the process, since cooling would result in setting of the cocoa liquor in less heated areas of the mill.

The finely milled cocoa liquor is stored in heated buffer storage before further processing. The cocoa liquor is often stored in this manner for periods of days or weeks depending on the demand for, or sale for, further processing.

For the production of cocoa powder and cocoa butter, the finely milled cocoa liquor is subjected to hydraulic filter pressing. In the hydraulic filter press, the cocoa butter is separated from the cocoa, which is reduced to a cocoa cake with a fat content normally ranging from 10% to 25%. The residual fat content of the cake depends on the degree of pressure and the time during which pressure is applied on the cocoa butter press. Both pressure and duration of pressure are normally predetermined in a pressing program. The "cocoa cake" is a solid compressed mass which is ground and sieved to produce cocoa powder.

Hydraulic filter pressing is a crucial and expensive step in the production of cocoa powder and cocoa butter.

For the sake of completeness, it should be mentioned that the alkalization step can also be performed on the cocoa beans, on the cocoa liquor, on the cocoa cakes or even on the final cocoa powder. If the only aim is to separate cocoa butter, and the cocoa cake need not fulfil any particular quality requirements, the alkalization step can be omitted, so that only moistening is performed. However, this is only the case when a cocoa powder with a natural pH is desired.

The quality requirements to be fulfilled by the resulting cocoa cakes with respect to fat content and particle size are very specific. In particular, the fat content of the cocoa cake is important. The current market price of cocoa butter is about 2.55 times that of cocoa powder. Therefore, for example, the cocoa butter content of a "20/22% cocoa powder", that is, a cocoa powder containing 20-22% cocoa butter, should, from a economic point of view, be as close as possible to the minimum value of the range of fat required. During storage of cocoa liquor, a certain degree of separation of cocoa butter and cocoa solids normally occurs. This means that the fat content of the cocoa liquor from a single batch entering the press will vary about +/-0.5 %. Consequently, cocoa manufacturers are generally not able to rely on the fat content of the cocoa liquor fed into the butter press. Since the residual fat content of the cocoa cakes is calculated on the basis of the weight of fat separated during pressing and the weight of the liquor entering the press, the manufacturers normally calculate with a fat content in the final cocoa cake of 20.5 % to secure that the actual content will not be below 20%. Therefore, the possibility of establishing a continuous process from the cocoa liquor to the filter press and thereby avoiding storage for longer periods and consequently, minimizing separation, would be of great economic value to the manufacturers, but such a continuous process would require that the cocoa liquor produced for the continuous feeding of the filter press is a well-defined and uniform product.

## DISCLOSURE OF THE INVENTION

The method of the invention for treating a cocoa liquor to reduce the viscosity thereof comprises subjecting the cocoa liquor to treatment in a high pressure homogenizer.

As explained in greater detail below, it has surprisingly been found that this treatment results in a very considerably reduction in the viscosity of the cocoa liquor.

By the method according to the present invention, it is possible to inexpensively and easily obtain high quality cocoa liquor with low viscosity, without impairing other parameters, such as particle size and particle size distribution.

The low viscosity of the cocoa liquor prepared according to the present invention results in considerable advantages compared to known cocoa liquors, because the low viscosity of the liquor results in marked improvement of the capacity of the filter press when the liquor is subjected to pressing in conventional filter presses.

As mentioned above, the main purpose of the filter pressing is to separate the cocoa butter from the solid particles of cocoa. It has been recognized by the present inventor that the viscosity of the liquor is of great importance for the efficiency of the cocoa butter press cycle. A high viscosity will cause a very fast pressure buildup in the liquor containers termed "pots", of the filter press, this is a great disadvantage, since the liquor tends to solidify primarily in the periphery close to the press outlet termed "filtermat" of the pot (a pot consists of a container formed as a telescopically compressible cylinder which is placed horizontally in the filter press, both ends of the container are closed with plates termed "filtermat plates" where the fat escapes). Thus, in order to get cocoa butter out of the pressing chamber with the highest flow possible, it is important to keep the pressure below a certain value, for example 160 bars, as long as possible. When the pressure is kept below this value, cocoa butter from the centre of the pot is able to pass a relatively fluid cocoa cake near the filtermat. In other words, by balancing the pressure buildup, the flow in the pot remains sufficient to allow escape of the cocoa butter. However, a problem exists in that it is not always possible to balance this pressure buildup if the viscosity of the cocoa liquor is high. With such high viscosity and "bad pressable" liquor, manufacturers usually have to decrease the hydraulic power applied to the filterpress in order to arrive at acceptable production rates. This means that when the manufacturers are not able to control the viscosity of the cocoa liquor entering the filter press, the efficiency of the press can be adversively influenced.

It has been found that cocoa liquor with a low viscosity will be able to sustain higher hydraulic pressure. The hydraulic pressure is responsible for the speed of the device, termed ram, which presses the pots together. Thus, the lower viscosity enables the liquor to sustain a higher ram speed without a fast pressure buildup. This means that the duration of the cocoa butter press cycle can be reduced. This ability of the low-viscosity cocoa liquor to sustain higher hydraulic pressure is of particular importance when cocoa powder with a low fat content is produced, since the decrease in fat content of the liquor which occurs during pressing increases the risk of high pressure buildup. It is furthermore believed that lower viscosity results in less wear on the pressing equipment. Pressing chamber flanges are sealed by cords, and every time the press opens and closes, the cords are subjected to wear. Normally, every 8 hours some of the cords have to be replaced because the cocoa butter press leaks cocoa liquor into the cocoa butter discharge. When the process is speeded up just by increasing the hydraulic pressure of the press, most of the expected increase in capacity is lost, because faster cycles result in an increased maintenance requirement. When the liquor has a low viscosity, the pressing program may be adapted so that it is possible to maintain higher speeds with no increased maintenance requirement, and thereby to increase the capacity of the cocoa butter press.

In the present specification and claims, the term "cocoa liquor" designates a liquid cocoa mass consisting substantially of crunched cocoa nibs. The term "treatment in a high pressure homogenizer" means any treatment in which the cocoa liquor is passed through one or more homogenizing valves by means of a high pressure pump. The term "operating pressure of the high pressure homogenizer" designates a total pressure drop over the homogenizing valve or valves.

High pressure homogenizers constitute a special class of homogenizing equipment. High pressure homogenizers are described, for example, by Phipps, L.W., The High Pressure Dairy Homogenizer, Theoretical Bulletin 6, The National Institute for Research in Dairying, Reading, England, NIRD, 1985.

Present day high pressure homogenizers consist basically of a high pressure positive displacement pump with a number of pistons which minimize pressure fluctuations, and a homogenizing valve of the drop and lift type. Homogenization is well known in the milk industry, in which fat globules are broken up to such an extent that they remain uniformly distributed in the aqueous liquid phase. Among the theories of the effective forces involved in homogenization of milk, shearing effects have been mentioned. Shear phenomena are bound to be operative in a valve, especially when homogenizing slit widths are very small and velocity gradients very steep; the frictional energy losses are considerable. The explanation of the process of globule disruption in milk relates to high frequency vibrations. Also turbulence, shattering or impact effects, and cavitation have been mentioned.

Use of homogenizers is also known for reducing the particle size of ink and also for disruption of for example plant cells and for extraction of constituents thereof such as proteins. Homogenization has been introduced in the production of chocolate and cocoa milk, in which cocoa liquor or cocoa powder is mixed with other ingredients such as cocoa butter, sugar, flavours, milk powder, and surface active agents such as lecithins and other agents.

In Swiss patent No. 679 629, it is disclosed that in beverages such as cocoa milk, milk chocolate and fruit drinks, insoluble cell fragments tend to sediment. To counteract the sedimentation tendency, thickening agents are normally added, but the use of such agents have undesired effects on the beverage quality. The object of the invention described in the patent is to break down plant cell material into low-molecular components that are soluble in water, milk or similar liquids so that stabilizing additives to prevent sedimentation may be omitted. The example of the patent describes a method for breaking down a low fat cocoa powder suspension by subjecting the suspension to a two-stage treatment with different enzymes accompanied by homogenization followed by centrifugation. The soluble phase is dried to the end product by freeze drying. Thus, the purpose of the known process is to obtain an "instant" beverage powder which is soluble in water or milk. In the process described in the example, the yield of soluble cocoa compounds exceeds 45%.

It seems difficult to explain the background for the viscosity reduction obtained according to the present invention. Investigations of the particle shape and size and particle size distribution of the cocoa particles in the treated cocoa liquor have been performed, but it has not been possible to demonstrate any significant change in the particle size or particle size distribution in the treated cocoa liquor compared to the untreated cocoa liquor when applying the measuring methods conventionally used. The most distinctive parameter with reference to the viscosity reduction obtained according to the invention seems to be the operating pressure of the high pressure homogenizer.

The preferred operating pressure for a particular high pressure homogenizer will be selected from a number of considerations involving the desired reduced viscosity to be aimed at, the starting viscosity of the cocoa liquor, the type and capacity of the high pressure homogenizer, etc.

Thus, according to the invention, the high pressure homogenizer is preferably operated at a pressure of at least 10 bar, such as at least 50 bar, such as at least 70 bar, such as at least 100 bar, such as at least 200 bar, such as at least 500 bar, such as at least 1000 bar, such as at least 1500 bar, such as about 2000 bar.

The treatment of the liquor in the high pressure homogenizer may be performed in one stage, that is, with one passage of the liquid through the homogenizer, or it may be performed in two or more stages. A treatment in two or more stages may be performed in series or by recirculation of the treated liquor through the high pressure homogenizer, or it may be performed by passage of the cocoa liquor through a series of two or more high pressure homogenizers. A treatment in two or more stages may be performed with at least two different pressures. As will appear from the experiments reported in the examples herein, a treatment comprising one passage or a treatment comprising two passages with a first passage at a higher operating pressure and a second passage at a lower operating pressure has given very good results.

The viscosity reduction obtained using the method of the invention is considerable, normally, a reduction by 20% or 30% or 40% compared to the viscosity prior to the treatment, with viscosity reductions by 50% or 70% or even as high as 75% or 80% being realistically obtainable using the method according to the invention.

The treated cocoa liquor according to the method of the invention will normally have a viscosity of at the most 1200 cP at 70°C, such as at the most 1000, more preferred at the most 800, such as 600, even more preferred at the most 500, such as at the most 400. Even lower viscosities may be obtainable when using very high operating pressures in the high pressure homogenizer, such as a viscosity about 300 cP.

Among high pressure homogenizer valves, the high pressure homogenizers equipped with emulsion-type valves are preferred for the method according to the present invention.

The temperature of the cocoa liquor during the treatment in the high pressure homogenizer is normally in the range of 50-120°C, such as in the range of 60-100°C, e.g. 60-80°C and in all events, of course, a temperature at which cocoa butter is molten or liquified.

The method according to the invention may comprise subjecting a cocoa liquor to a treatment in a high pressure homogenizer to reduce the viscosity of the cocoa liquor and then subjecting the treated cocoa liquor to a separation process to separate cocoa butter from the cocoa particles. The separation process may be a process wherein the separation is performed by sedimentation or filtration.

The cocoa liquor according to the invention will normally have a viscosity of at the most 1100 cP at 70°C, such as at the most 1000, such as at the most 800, such as at the most 600, such as at the most 500, such as about 400.

The method for producing cocoa butter and cocoa powder according to the invention comprises subjecting a cocoa liquor to a treatment in a high pressure homogenizer to reduce the viscosity of the cocoa liquor and then subjecting the treated cocoa liquor to a separation process to separate cocoa butter from the cocoa particles and obtaining the cocoa butter and the cocoa powder, respectively. The separation process may be a process wherein the separation is performed by sedimentation or filtration.

A further embodiment of the method according to the invention for producing cocoa butter and cocoa powder comprises subjecting a cocoa liquor to a treatment in a high pressure homogenizer to reduce the viscosity of the cocoa liquor and then subjecting the treated cocoa liquor to a separation process to separate cocoa butter from the cocoa particles and obtaining the cocoa butter and the cocoa powder, respectively, wherein the viscosity of the treated cocoa liquor is measured after the treatment in the high pressure homogenizer and before the separation process. The viscosity measurement may be an on-line measurement.

In a further embodiment of the invention, the result of the viscosity measurement mentioned above is used as basis for adjusting the conditions in the homogenizing treatment and/or the separation process.

A still further embodiment of the invention comprises a method wherein the treatment of the liquor in a high pressure homogenizer is performed in at least two stages and the viscosity of the cocoa liquor is measured between two treatment stages. The viscosity measurement herein may be an on-line measurement.

In a further embodiment of the invention, the result of the viscosity measurement mentioned above is used as a basis for adjusting the conditions in the first and/or any of possible succeeding high pressure homogenizing treatment.

While it is described herein in detail how the treatment in a high pressure homogenizer results in the above-mentioned very beneficial effects on the cocoa liquor with respect to reducing the viscosity thereof without impairing other quality parameters of the cocoa liquor, it is contemplated that such effects might also be obtained by subjecting the cocoa liquor to ultrasonic treatment. It is contemplated that in such an embodiment, the various conditions and parameters will be the same as described herein for the treatment in the high pressure homogenizer, except that the treatment in the high pressure homogenizer is replaced with ultrasonic treatment; in this connection, it is contemplated that for a particular treatment where the high pressure homogenizer is operated at a particular effect expressed as energy per unit of volume per unit of time supplied to the cocoa liquor, a corresponding ultrasonic treatment would be one which delivers the same effect. While these contemplations are based on considerations concerning a possible similarity between the conditions to which the cocoa liquor is subjected in the high pressure homogenizer, confer above, and the conditions known to apply to materials subjected to ultrasonic treatment, it cannot be precluded that the effects observed as disclosed herein are unique for a process in the high pressure homogenizer, and thus, would not be obtainable to similar or equivalent extent by ultra-sonic treatment.

BRIEF DESCRIPTION OF THE DRAWINGS

The invention will now be further described with reference to the drawings, wherein

Fig. 1 is a flow sheet showing conventional processing of cocoa beans,

Fig. 2 is a flow sheet showing steps normally performed in connection with the method according to the invention,

Fig. 3 is diagrammatic illustration of an embodiment of a system for performing the method according to the invention.

Fig. 4 is a diagrammatic cross-sectional view of a high pressure homogenizer valve of the emulsifying valve type.

Fig. 5 illustrates a high pressure homogenizer valve of the rupture type.

Fig. 6 is a graph showing the viscosity of three cocoa liquors treated according to the invention as a function of operating pressure.

Fig. 7 consists of photographs of particles of a liquor (liquor A, prepared as described in Example 2 below) before treatment in a high pressure homogenizer (upper picture, magnified 1000 times) and of particles of an equivalent liquor after treatment in a high pressure homogenizer equipped with a rupture-type valve (lower picture).

Fig. 8 shows sections of the same photographs as shown in Fig 7, but the upper photograph is magnified 1500 times and the lower photograph is magnified 2000 times.

Fig. 9 consists of photographs of particles of a liquor (liquor B, prepared as described in Example 2 below) before treatment in a high pressure homogenizer (upper picture, magnified 1000 times) and of an equivalent liquor after treatment in a high pressure homogenizer equipped with a emulsion-type valve (lower picture).

Fig. 10 shows sections of the same photographs as shown in Fig 9, but both photographs are magnified 2000 times.

DESCRIPTION OF THE PREFERRED EMBODIMENT

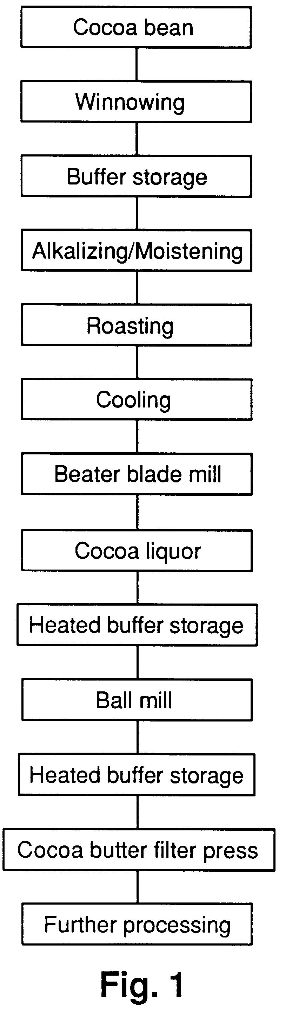

The flow sheet of Fig. 1 shows conventional processing of cocoa beans from the stage in which they are normally received from the cocoa-producing areas through the stage in which the cocoa powder and the cocoa butter have been separated and are further processed.

As explained above, the cocoa beans are first broken and subjected to winnowing to remove the shells and are then stored in a buffer storage. Then, the cocoa beans are in almost all cases subjected to alkalization and moistening. The next step normally performed is roasting followed by cooling. The cooled roasted cocoa beans are then subjected to nib grinding, normally in a beater blade mill. In the grinding process, frictional heat will liquefy the fat (cocoa butter) liberated from the nibs, and the resulting product will be a free-flowing liquid containing suspended cocoa particles, in other words, the cocoa liquor. The cocoa liquor is kept in a heated buffer storage at a temperature above the melting point of the cocoa butter. The next step in the conventional process is treatment in a ball mill to further liberate fat entrapped in the cocoa particles. The effluent from the ball mill is kept in a heated buffer storage until it is subjected to separation of cocoa butter and cocoa powder in a filter press. The products obtained from the filter press, i.e. the cocoa butter and the cocoa powder, are further processed, either packed for shipping or subjected to further processes in the production of chocolate, such as explained above.

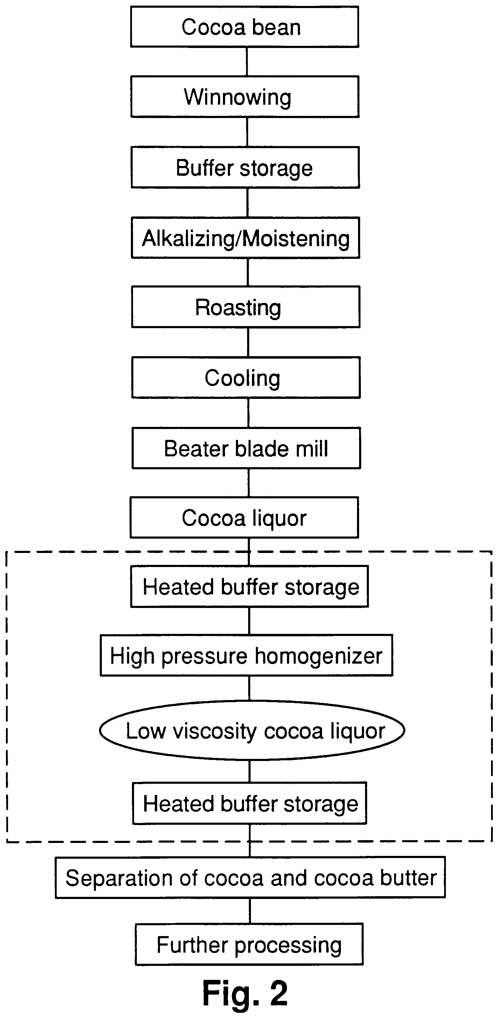

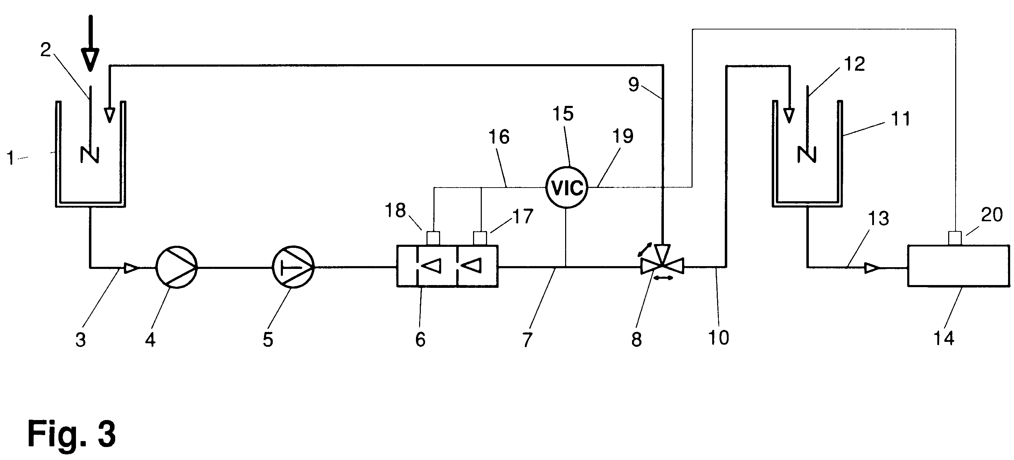

As appears from Fig. 1 and Fig. 2, the initial steps normally performed in connection with the method according to the invention are the same as in the conventional method. Conventional introductory operations, including nib grinding, are normally used to produce the cocoa liquor subjected to the special treatment according to the invention, and the cocoa liquor produced in the nib grinding process will normally also be stored in a heated buffer storage when the method of the invention is used on an industrial scale. The part of the flow sheet showing the crucial treatment in a high pressure homogenizer to produce low-viscosity cocoa liquor and the heated buffer storage before and after the treatment is shown in a broken line box; this part is illustrated in greater detail in Fig. 3 which is discussed below. As is explained herein, the separation of the cocoa powder and cocoa butter may be performed in a cocoa butter filter press or using other separation techniques which are made possible and economic because of the low viscosity of the cocoa liquor obtained in the method of the invention.

As shown in Fig. 3. in which cocoa liquor kept in a buffer storage or container **1** and agitated by means of an agitator **2** is fed through a conduit **3** by means of a feed pump **4** to a high pressure pump **5** and further to a high pressure homogenizing valve unit **6** comprising two homogenizing valves arranged in series. From the unit the cocoa liquor is passed through a conduit **7** to a three-way valve **8** by means of which the cocoa liquor may selectively be either recycled through a conduit **9** back to the heated buffer storage **1** or through a conduit **10** to a heated buffer storage **11** agitated by means of an agitator **12**. From the heated buffer storage **11**, the low-viscosity cocoa liquor is led through a line **13** for further processing in separation means **14** such as a filter press. The recycling through the conduit **9** is performed until a suitable pressure of the system for homogenizing is reached or when an additional high pressure homogenizing treatment is desired. The viscosity of the cocoa liquor passed through the conduit **7** may be determined by means of a viscosity determining and control device **15** which through a line **16** communicates with control means **17** and **18** controlling the operating pressure over the high pressure homogenizing valve unit by adjusting the valves therein (the viscosity measurement can also be performed when the cocoa liquor have passed the valve unit with a pressure of zero bar). The control device **15** also communicates with a control means **20** through a line **19** for controlling the separation means **14**.

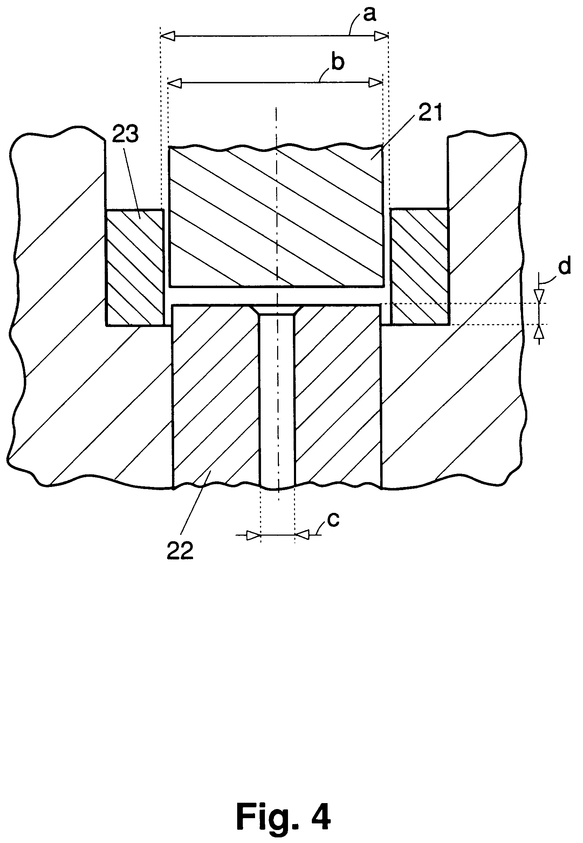

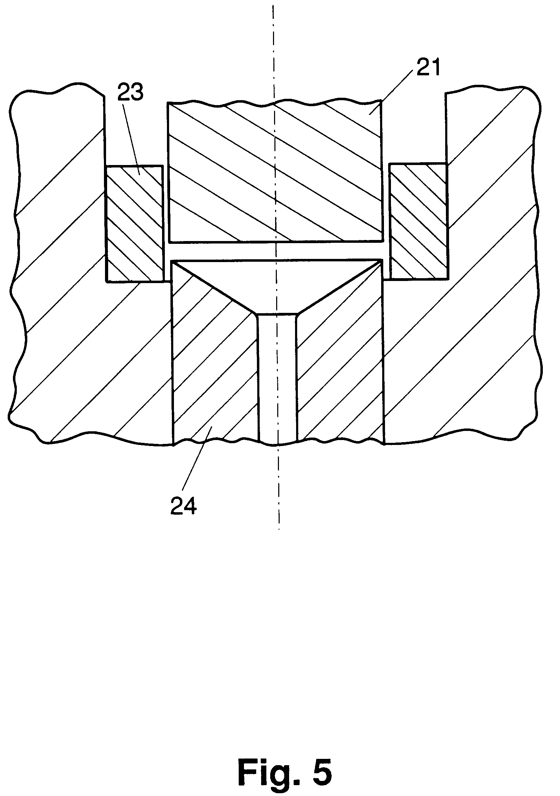

As shown in Fig. 4, the valves of the homogenizing valve unit **6** comprises a circular impact head **21** having a diameter **b**, a circular lower head **22** through which the cocoa liquor is introduced through a bore having the diameter **c**. The impact head **21** and the lower head **22** are surrounded by an impact ring **23** having an inner diameter **a**. The lower end of the impact ring **23** extends below the upper end of the lower head **22** by a distance **d**. The diameter **a** was approximately 14 mm, the diameter **b** was approximately 12 mm, the diameter **c** was approximately 5 mm, and the distance **d** was approximately 3 mm. This type of valve is the presently preferred valve type for the high pressure homogenizer and is one of the valve types used in parts of the experiments described below. The other valve type used in parts of the experiments, the rupture-type valve, is illustrated in Fig. 5 wherein the numerals **22** and **23** have the same meaning as in Fig. 4 and the diameter of the bore of the lower head **24** is increasing in the direction against the upper surface meeting the impact head **21** resulting in a sharp edge of the lower head **24** meeting the impact head **21**.

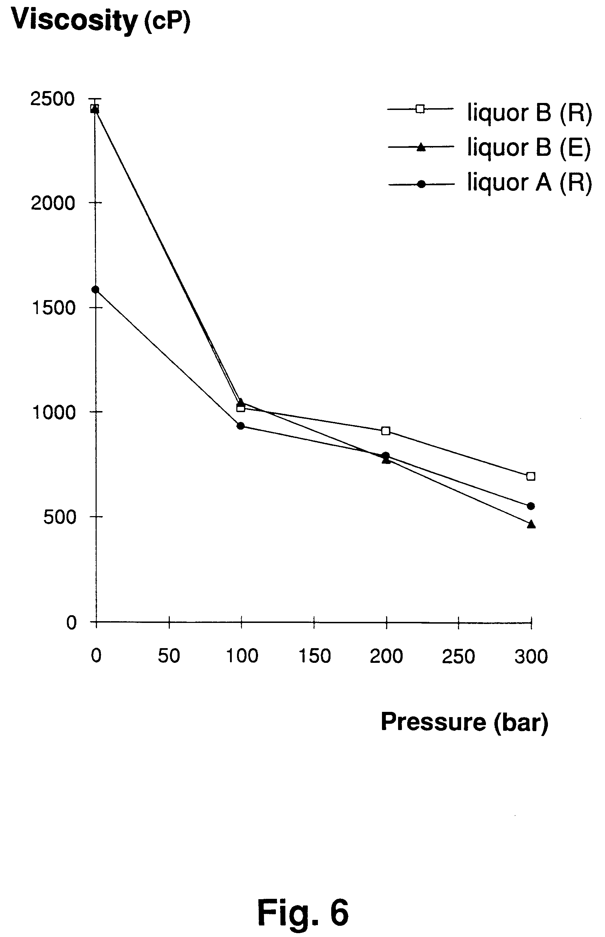

The data for the graph shown in Fig. 6 are taken from Example 2 below. The viscosity corresponding to a pressure at zero bar is the viscosity of the liquor prior to the treatment in the high pressure homogenizator. The curve which is labelled with white squares refers to the treatment of the cocoa liquor B in the homogenizer which is equipped with a rupture-type valve (liquor B (R)). The curve which in the diagram is marked with black triangles refers to the treatment of liquor B in the high pressure homogenizer in which the homogenizer is equipped with the emulsion-type valve (liquor B (E)). The curve which in the diagram is marked with black bullets refers to the treatment of the cocoa liquor in the high pressure homogenizer in which the homogenizer is equipped with the rupture-type valve (liquor B (R)). The graph shows that a considerable reduction of viscosity is obtained by treating cocoa liquor in a high pressure homogenizer. The graph also shows that the reduction increases with increasing operating pressure. No minimum value for the viscosity obtained with increasing operating pressure seems to have been reached within the range of operating pressures illustrated in the diagram.

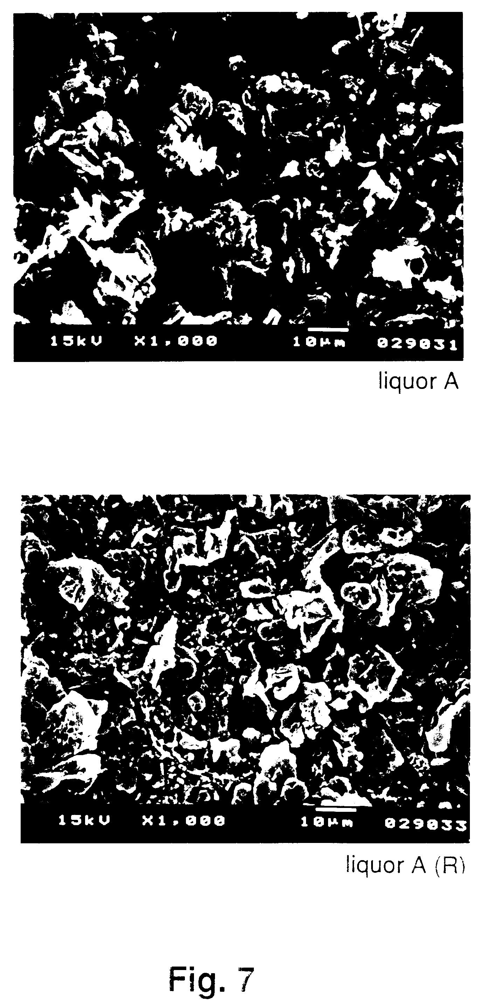

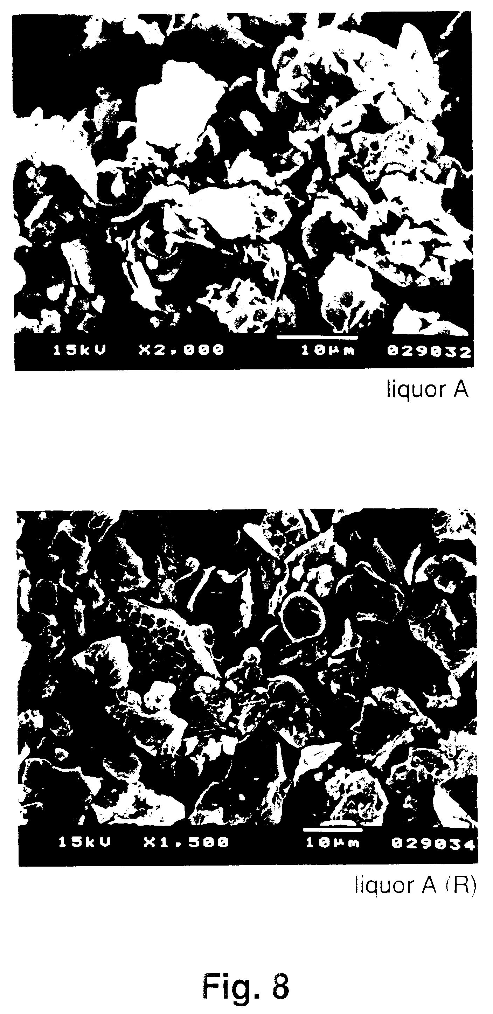

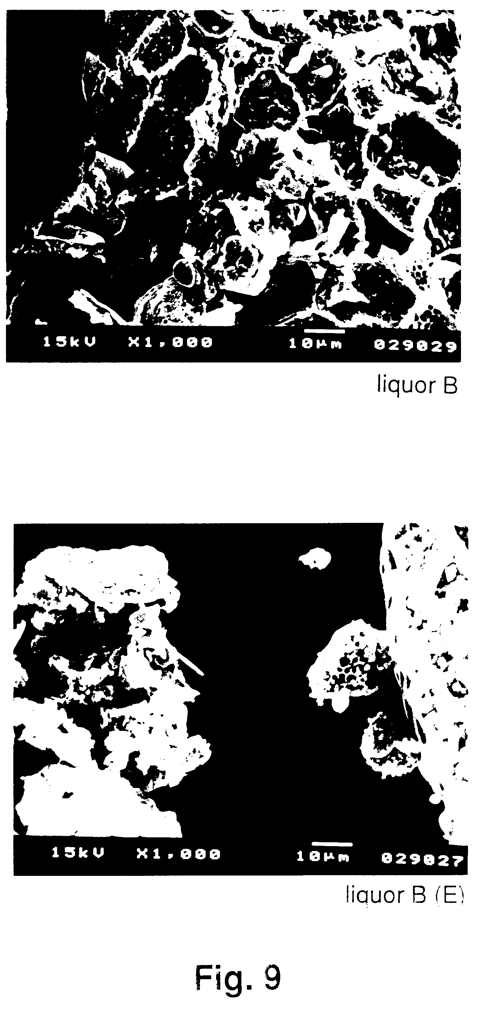

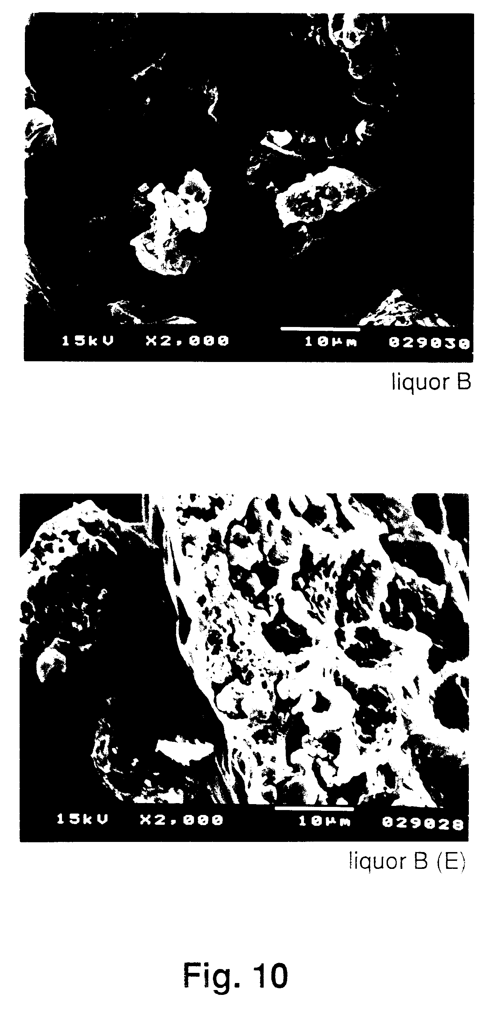

The effect of high pressure homogenizing on size and shape of cocoa particles is illustrated in scanning electron microscope photographs as shown in Fig. 7-10. The photographs are all photos taken through a scanning electron microscope. The samples for photograph were prepared by heating the cocoa liquor (cocoa liquor A and B) to about 80°C, diluting a small sample (about 0.5 g) of the heated cocoa liquor with about 10 ml acetone in a test tube, agitating the test tube vigorously in order to dissolve the cocoa fat, filtering the mixture so that the particles were kept back on the filter paper, washing the filter twice with about 5 ml acetone to remove any residual fat, and finally transferring a sample for microscopy from the filter paper to the microscope.

From Fig. 7 to 10 it appears that no significant difference in shape or size of the particles after treatment in the high pressure homogenizer operated with af pressure of 250 bar in a first stage and 50 bar in a second stage (lower pictures) is apparent when compared to particles which have not been subjected to the treatment (upper pictures).

The invention is further illustrated in the examples below in which the grinding process for the cocoa liquors used as starting materials in the examples were, in one case, grinding the pre-treated cocoa nibs to liquor with a knife mill, and, in the other case, followed by grinding in a ball mill. It will be understood that also other kinds of cocoa liquors as defined above, but pre-treated and ground in other ways as described in Example 2, would be suitable starting materials for the method according to the invention.

The NS 3011 homogenizer referred to in the following Examples is a NIRO-SOAVI High Pressure Homogenizer type Ariete NS 3011.

First homogenizing stage: Consisting of three special stainless steel alloy parts (stellite) placed into a AISI 316 stainless steel block. A manual actuator enables an accurate adjustment of the operating pressure. Operating pressure is adjusted by a knob.

Second homogenizing stage: Placed in series to the first stage.

The NS 1001 H Panda homogenizer referred to in the following Examples is a table-top sized high pressure homogenizer designed for laboratory use. Except for capacity, the Panda homogenizer is comparable with homogenizers designed for industrial operations.

**EXAMPLE 1**

PILOT STUDY

PREPARATION METHODS FOR EXAMPLE 1

Three samples, A, B and C, of cocoa liquor were prepared and treated in a high pressure homogenizer as explained in the following:

Sample A was prepared by grinding cocoa nibs in a knife mill followed by milling in a ball mill. The sample was heated to 90°C and stirred to avoid separation, fed via a hopper to a high pressure homogenizer of the type NS Panda 1001 H supplied by NIRO-SOAVI, PARMA, ITALY. The hopper was surrounded by an air jacket heated with steam. The sample was stirred in the hopper by an agitator. Before homogenization was started, the sample was recirculated for 10 minutes without pressure buildup to secure an equal temperature of the sample arriving at the homogenizer valve. The homogenizer was equipped with a rupture-type valve (cf. Fig. 5) and was operated at a pressure of 500 bar and a flow rate of 10 l/h.

Sample B was prepared by grinding cocoa nibs in a knife mill. The sample was heated to 90°C and stirred to avoid separation, fed to a NIRO-SOAVI high pressure homogenizer, type NS 3011, and treated in the same way as explained for Sample A before activating the homogenizer. The homogenizer was operated with a pressure of 200 bar, a flow rate of 400 l/h and the homogenizer was equipped with a emulsifying-type valve (cf. Fig.4).

Sample C was prepared and treated in the same way as Sample B except that the operating pressure of the high pressure homogenizer was 350 bar.

After recirculation, the temperature of the samples has dropped so that they were homogenized at 80°C. All the samples were homogenized in one stage. In Table I, the conditions mentioned above for treatment in a high pressure homogenizer in the pilot study are listed.

Table I

| Sample | Type of homogenizer | Flow-rate | Type of valve | Pressure (bar) |
|--------|---------------------|-----------|---------------|----------------|
| A | NS 1001 H PANDA | 10 l/h | Rupture-valve | 500 |
| B | NS 3011 | 400 l/h | Emulsifying valve | 200 |
| C | NS 3011 | 400 l/h | Emulsifying valve | 350 |

RESULTS

After treatment in the high pressure homogenizer, the viscosities of the samples were measured at 70°C. At the same time and using the same method, the viscosity of a cocoa liquor separated from Sample A before treatment in the homogenizer was measured. The results are listed in Table II.

Table II

| Sample | Viscosity at 70°C |
|--------|-------------------|
| Starting material for sample A | 2500 cP |
| A after treatment | 400 cP |
| B after treatment | 1300 cP |
| C after treatment | 400 cP |

DISCUSSION OF PILOT STUDY

In case of treatment of cocoa liquor in the homogenizer equipped with a rupture-type valve in which the viscosity of the starting material is 2500 cP measured under the same conditions as the samples treated in the homogenizer, a distinct reduction in viscosity after homogenization is observed. In this pilot study, the viscosity of the starting material treated in the NS 3011 homogenizer was not measured; however, it is not to be expected that the cocoa liquor processed with a knife mill should have a viscosity below the viscosity measured for the cocoa liquor processed by the ball mill. Thus, from this pilot study, it appears that the viscosity of a conventional cocoa liquor is reduced after treatment in a high pressure homogenizer and that the degree of reduction of viscosity is enhanced by the operating pressure of the homogenizer, as illustrated in Fig. 6.

**EXAMPLE 2**

PREPARATION METHODS FOR EXAMPLE 2

STARTING MATERIALS

Raw material

| Cocoa beans used: | 20% Ivory coast 80% Malaysia |
|-------------------|------------------------------|
| Fat content: Moisture content: | 53.8% 6% |

Pre-treatment

| Winnowing: | Bauermeister winnower |
|---|---|
| Alkalization by means of: | Carle Montanari AK1000 |
| Moisture added during alk.: | + 10% w/w |
| $K2CO3$ (dissolved in $H_2O$) added: | + 2% w/w |
| Alkalization residence time: | 44 minutes |
| Alkalization temperature: | heated up to 95°C |
| Roasting nibs by means of: | Barth roaster RS3000 |
| Residence time: | 44 minutes |
| Moisture after roasting: | 2% w/w |
| Cooling nibs: | Forced air cooling bed, to prevent fat migration. |
| Residence time: | 10 minutes |

The pre-treated material produced by the steps indicated above was for the preparation of starting material B further treated as follows:

STARTING MATERIAL B

| Nibs fed into knife mill of: | Beater blade mill Bauermeister SMM 801 |
|---|---|
| Sieve used: | 0.25 mm |
| Mill room diameter: | 803 mm |
| Mill room height: | 333 mm |
| Power required: | 45 kW |
| Throughput: | 1200 kg/h |
| Output: | Cocoa liquor B |

STARTING MATERIAL A

For the preparation of starting material A, the starting material B prepared as indicated above was further treated as follows:

| Temperature of cocoa liquor B: | 60°C |
|---|---|
| Cocoa liquor B fed to: | Ball mill |
| Type: | Netszch KE 100 SK |
| Volume: | 160 liters |
| Product contents: | 120 liters |
| Bullet contents: | 500-600 kg |
| Throughput | 800 kg/h |
| Output: | Cocoa liquor A |

MEASUREMENT OF VISCOSITY

Equipment:     Haake Rhotovisco 11
All samples were measured using measurement cylinder MV2. The equipment included a thermostatically controlled water bath which was held at 70°C.

MEASUREMENT OF PARTICLE SIZE AND DISTRIBUTION

Equipment:    Malvern instruments MASTER Particle Sizer, M3,0

Samples of cocoa liquor were melted in an oven at 50°C and mixed manually with a spoon. A 0.5% product solution in 1,1,1-trichloroethane was prepared. The samples so dissolved were treated ultrasonically for 5 minutes. With the ultrasonic treatment still in progress, the samples were injected into the measurement cuvette from the Malvern instruments MASTER Particle Sizer, M3,0 analyzer. Measurement with the Malvern was started after injection.

HOMOGENIZING

Starting materials of cocoa liquor A and B prepared as described above were subjected to treatment in a high pressure homogenizer.

The preparation of starting material in the form of cocoa liquor A and B is described above. The preparation for treatment in a high pressure homogenizer of the NS 3011 type and selection of samples for the further measurements indicated above were performed as follows.

25 liters of starting material (cocoa liquor A or B) were heated in a pan to 70°C and stirred until separation was eliminated. The liquor was conveyed to the hopper in which it was heated in order to maintain the temperature at 70°C. Then, processing the liquor through the homogenizer began (compression block heated to 70°) and when stable, samples of the processed liquor were collected for analyses. The process was stopped and the next set of test conditions was established. The processing was started again and when stable (after approx. 2 min.) samples were collected. The entire procedure was repeated with other test conditions.

RESULTS

Treatment conditions and results are listed in Table III.

Table III

NS 3011 HIGH PRESSURE HOMOGENIZER

Flow rate: 400 l/h

| Starting material | Pressure (bar) | Valve | D90 ($\mu$m) | D50 ($\mu$m) | Viscosity (Poise) |
|---|---|---|---|---|---|
| A: | Ball milled | | 20.8 | 8.4 | 15.84* |
| B: | Knife milled | | 33.7 | 10.0 | 24.52* |
| | | | | | |
| B | 100 | R | 29.0 | 9.4 | 10.22* |
| B | 200 | R | 27.5 | 8.8 | 10.62 |
| B | 170/30 | R | 29.8 | 9.3 | 9.12* |
| B | 300 | R | 29.0 | 8.9 | 8.33 |
| B | 250/50 | R | 34.7 | 9.2 | 6.98* |
| | | | | | |
| B | 100 | E | 30.6 | 9.8 | 10.48* |
| B | 70/30 | E | 32.0 | 10.1 | 10.89 |
| B | 200 | E | 27.3 | 9.3 | 7.79* |
| B | 170/30 | E | 28.0 | 9.5 | 5.98 |
| B | 300 | E | 28.2 | 9.0 | 4.71* |
| B | 250/50 | E | 29.3 | 9.5 | 4.29 |
| | | | | | |
| A | 100 | R | 20.3 | 8.5 | 9.33* |
| A | 200 | R | 19.6 | 8.2 | 8.1 |
| A | 170/30 | R | 19.8 | 8.4 | 7.94* |
| A | 300 | R | 17.5 | 7.7 | 5.96 |
| A | 250/50 | R | 17.8 | 7.9 | 5.54* |

PANDA HIGH PRESSURE HOMOGENIZER

Flow rate 10 l/h

| A | 100 | R | 18.8 | 8.1 | 8.36 |
|---|---|---|---|---|---|
| A | 70/30 | R | 19.7 | 8.2 | 8.45 |

```
Pressure:              Pressure of stage 1/pressure of stage 2
Valve:                 E: Emulsion-type valve of the type
                       illustrated in Fig. 4
                       R: Rupture-type valve of the type
                       illustrated in Fig. 5
D90:                   90% of particles size below value
D50:                   50% of particles size below value
Viscosity:             Poise
*:                     Results entered in the graph shown in
                       Fig. 6
```

The results labelled with an asterisk are entered in the graph shown in Fig. 6 in which the viscosity is shown as a function of pressure.

**Claims**

1. A method for treating a cocoa liquor to reduce the viscosity thereof, comprising treating the cocoa liquor in a high pressure homogenizer.

2. A method according to claim 1, wherein the high pressure homogenizer is operated at a pressure of at least 10 bar, such as at least 50 bar, such as at least 70 bar, such as at least 100 bar, such as at least 200 bar, such as at least 500 bar, such as at least 1000 bar, such as at least 1500 bar, such as about 2000 bar.

3. A method according to any of the preceding claims, wherein the treatment of the liquor is performed in at least two stages.

4. A method according to claim 3, wherein the liquor is treated in at least two stages with at least two different pressures.

5. A method according to any of the preceding claims, wherein the viscosity reduction is a reduction by at least 20% of the viscosity prior to the treatment, such as at least 30%, such as at least 40%, such as at least 50%, such as at least 70%, such as at least 75%, such as about 80%.

6. A method according to claim 1, wherein the viscosity of the treated liquor is at the most 1200 cP at 70°C, such as at the most 1000 cP, such as at the most 800 cP, such as at the most 600 cP, such as at the most 500 cP, such as about 400 cP.

7. A method according to any of the preceding claims, in which the high pressure homogenizer is a high pressure homogenizer equipped with an emulsion-type valve.

8. A method according to any of the preceding claims, wherein the temperature during the treatment is in the range of 50-120°C, such as 60-100°C, such as 60-80°C.

9. A method according to any of the preceding claims, wherein the treated cocoa liquor is subjected to a separation process to separate cocoa butter from the cocoa particles.

10. A method according to claim 9, wherein the separation process is filtration or sedimentation.

11. A method according to claim 10, wherein the sedimentation process is centrifugation.

**12.** A cocoa liquor having a viscosity of at the most 1100 cP at 70°C, such as at the most 1000 cP at 70°C, such as at the most 800 cP at 70°C, such as at the most 600 cP at 70°C, such as about 400 cP at 70°C.

**13.** A method for producing cocoa butter and cocoa powder, comprising subjecting a cocoa liquor to a treatment in a high pressure homogenizer to reduce the viscosity of the cocoa liquor and then subjecting the treated cocoa liquor to a separation process to separate cocoa butter from the cocoa particles and obtaining the cocoa butter and the cocoa powder, respectively.

**14.** A method according to claim 13, wherein the separation process is filtration or sedimentation.

**15.** A method according to claim 13 or 14, wherein the viscosity of the treated cocoa liquor is measured after the treatment in the high pressure homogeniser and before the separation process.

**16.** A method according to claim 15, wherein the viscosity measurement is an on-line measurement.

**17.** A method according to claim 15 or 16, wherein the result of the viscosity measurement is used as basis for adjusting the conditions in the homogenizing treatment and/or the separation process.

**18.** A method according to claim 3 wherein the viscosity of the cocoa liquor is measured between two treatment stages.

**19.** A method according to claim 18, wherein the viscosity measurement is an on-line measurement.

**20.** A method according to claim 18 or 19 wherein the result of the viscosity measurement is used as basis for adjusting the conditions in the first and/or any of possible succeeding high pressure homogenizing treatment.

Cocoa bean

Winnowing

Buffer storage

Alkalizing/Moistening

Roasting

Cooling

Beater blade mill

Cocoa liquor

Heated buffer storage

Ball mill

Heated buffer storage

Cocoa butter filter press

Further processing

# Fig. 1

**Fig. 2**

EP 0 593 833 A1

**Fig. 3**

# Fig. 4

**Fig. 5**

**Fig. 6**

liquor A

liquor A (R)

# Fig. 7

liquor A

liquor A (R)

Fig. 8

liquor B

liquor B (E)

Fig. 9

liquor B

liquor B (E)

Fig. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-B-2 130 134 (A. SCHMITT) 16 November 1972 * the whole document * | 1,2,7,8 | A23G1/04 A23G1/18 A23G1/06 |
| X | EP-A-0 279 255 (CARLE & MONTANARI) 24 August 1988 * page 5, line 2-26; claims; figures * * page 7, line 3-32; table * | 1,5 | |
| Y | | 3,8-10, 13-20 | |
| Y | US-A-2 520 807 (J. MARCO) 29 August 1950 * column 1, line 54 - column 3, line 18; claims; figure * * column 3, line 63 - column 4, line 36 * | 3,8-10, 13-20 | |
| A | BE-A-526 708 (H. L. RICARD) 25 March 1954 * page 1, line 21 - line 25 * * page 3, line 31 - line 36; claims * | 1,9 | |
| A | FR-A-1 155 456 (MIKROVAERK) 2 December  1953 | | TECHNICAL FIELDS SEARCHED (Int. Cl.5 ) A23G |
| A | FR-A-345 520 (J. TALANSIER) 19 October 1904 * the whole document * | 1,2 | |
| A | US-A-3 904 777 (P. M. GOERLING ET AL.) 9 September 1975 | | |

The present search report has been drawn up for all claims

| Place of search | Date of completion of the search | Examiner |
|---|---|---|
| THE HAGUE | 15 JULY 1993 | GUYON R.H. |

EPO FORM 1503 03.82 (P0401)